# EUROPÄISCHE PATENTSCHRIFT

(11) **EP 0 699 471 B1**
(45) Veröffentlichungstag und Bekanntmachung des Hinweises auf die Patenterteilung: **12.08.1998**
(21) Anmeldenummer: 95112501.2
(22) Anmeldetag: 09.08.1995
(51) Int. Cl.: B01D 53/86

(54) **Verfahren zur Reinigung von Prozessgasen durch katalytische Oxidation**
Process for the purification of process gases by catalytic oxidation
Procédé pour la purification de gaz de processus par oxydation catalytique

(30) Priorität: 31.08.1994 DE 4430938
(43) Veröffentlichungstag der Anmeldung: 06.03.1996
(73) Patentinhaber: Zimmer Aktiengesellschaft, D-60388 Frankfurt (DE)
(72) Erfinder: Brück, Matthias, Dr., D-63517 Rodenbach (DE); Reitz, Hans, D-61191 Rosbach (DE)

(56) Entgegenhaltungen:
- US-A- 4 869 883

## Beschreibung

Die Erfindung betrifft ein Verfahren zur Reinigung von im wesentlichen sauerstofffreien Prozeßgasen aus der thermischen Festphasenbehandlung von Kondensationspolymeren durch katalytische Oxidation der oxidierbaren, überwiegend organischen Verunreinigungen unter Zudosierung eines sauerstoffhaltigen Gases und nachfolgende Rückführung des gereinigten Prozeßgases in die thermische Behandlung der Kondensationspolymere.

In der chemischen Industrie, einschließlich der Kunststoffindustrie, werden Reaktionen häufig in einer inerten Gasatmosphäre durchgeführt. Das inerte, im wesentlichen sauerstofffreie Gas, meist Stickstoff, Edelgase oder Kohlendioxid, dient dazu, den Luftsauerstoff von den Reaktanden fernzuhalten und/oder Reaktionsnebenprodukte aus dem Reaktionssystem auszutragen. Hierbei nimmt das inerte Gas, entsprechend den jeweiligen Partialdampfdrücken, kleine Mengen an Reaktionskomponenten und/oder Reaktionsnebenprodukten auf, von denen es vor der Wiederverwendung befreit werden muß.

Ein übliches Verfahren zur Reinigung derartiger Prozeßgase besteht in der katalytischen Oxidation der organischen und sonstigen oxidierbaren Verunreinigungen mit einem Überschuß eines sauerstoffhaltigen Gases (Erdöl, Erdgas, Kohle 109/7 - 8 [1993] 322 - 328). Regelgröße für die Zudosierung des sauerstoffhaltigen Gases ist hierbei der nach der Oxidation im Prozeßgas vorliegende Rest-Sauerstoffgehalt von etwa 2 %. Zur Kontrolle des Reinigungsgrades kann zusätzlich der Gehalt an Kohlenstoff-Verbindungen erfaßt werden.

Auch bei der nichtkatalytischen Nachverbrennung von Verbrennungsabgasen wird mit Sauerstoffüberschuß und dem Rest-Sauerstoffgehalt als Regelgröße gearbeitet, wobei als zusätzlicher Grenzwert ein Kohlenmonoxidgehalt der an die Atmosphäre abzugebenden, gereinigten Abgase von maximal 20 ppm gilt (US-Patent 5 213 492).

Im Anschluß an die oxidative Reinigung wird der überschüssige Sauerstoff durch katalytische Hydrierung entfernt und das Gas getrocknet, während das gebildete Kohlendioxid absorbiert wird oder im Gas verbleibt (US-Patent 3 756 990 und EP-Patent 0 222 714). Nachteilig hierbei ist, daß zur Entfernung des überschüssigen Sauerstoffs hochexplosiver und leicht brennbarer Wasserstoff erforderlich ist und somit umfangreiche Sicherheitsauflagen streng eingehalten werden müssen.

Die ebenfalls bekannte Entfernung von Sauerstoff aus Stickstoff durch katalytische Oxidation unter Zudosierung eines Überschusses eines Kohlenwasserstoffgases ist im vorliegenden Fall ungeeignet, da der Kohlenwasserstoffüberschuß im Stickstoff verbleibt (US-Patent 5 320 818). Die Zudosierung einer stöchiometrischen Menge Methanol findet wegen der sehr hohen Kosten des Methanol-Regel- und Einspeisesystems bisher technisch keine Anwendung (US-Patent 4 859 435).

Versuche, die katalytische Oxidation der oxidierbaren Verunreinigungen unter Zudosierung der stöchiometrischen oder leicht unterstöchiometrischen Sauerstoffmenge, entsprechend einem Restsauerstoffgehalt von weniger als 10 vpm durchzuführen, erwiesen sich im technischen Maßstab als unpraktikabel. Zum einen stellt ein Regelspielraum von 0 bis 10 vpm Sauerstoff sehr hohe Anforderungen an das Sauerstoffmeßgerät und den Regelkreis, zum anderen müssen je nach Gehalt an Verunreinigungen des Prozeßgases große Mengen Luft (als sauerstoffhaltiges Gas) mit einer Genauigkeit von deutlich weniger als 1 % bei Ansprechzeiten von höchstens 1 min dosiert werden, wobei 1 % Luftüberschuß bereits einem Sauerstoffüberschuß von etwa 50 vpm entsprechen. Eine derartige Luftmengenregelung ist praktisch nicht ausführbar.

Aufgabe der vorliegenden Erfindung ist daher, ein Verfahren zur Reinigung von im wesentlichen sauerstofffreien Prozeßgasen aus der thermischen Festphasenbehandlung von Kondensationspolymeren durch katalytische Oxidation der oxidierbaren, überwiegend organischen Verunreinigungen unter Zudosierung eines sauerstoffhaltigen Gases derart zu gestalten, daß das gereinigte und in die thermische Festphasenbehandlung rückzuführende Prozeßgas einen Gehalt an Sauerstoff von weniger als 10 vpm und an nicht oxidierten, organischen Verunreinigungen von weniger als 10 ppm aufweist, wobei dies ohne Verwendung von Wasserstoff und mit einem im technischen Maßstab vertretbaren Aufwand für eine zuverlässige Regelung realisiert werden sollte.

Die Lösung dieser Aufgabe erfolgt erfindungsgemäß durch ein Verfahren gemäß den Angaben der Patentansprüche. Dieses Verfahren zur Reinigung von Prozeßgasen aus der thermischen Festphasenbehandlung von Kondensationspolymeren durch katalytische Oxidation der überwiegend organischen Verunreinigungen ist dadurch gekennzeichnet, daß dem Prozeßgas soviel eines sauerstoffhaltigen Gases zudosiert wird, daß der nach der Oxidation gemessene Kohlenmonoxidgehalt des Prozeßgases im Bereich von 30 bis 1000 vpm liegt.

Das erfindungsgemäße Verfahren ist geeignet zur Reinigung von inerten Prozeßgasen wie Stickstoff, Edelgase, Kohlendioxid oder Gemische dieser Gase, die mit oxidierbaren, vorwiegend organischen Verbindungen verunreinigt sind und deren Sauerstoffgehalt vor der Reinigung deutlich niedriger ist als die zur vollständigen Oxidation der enthaltenen oxidierbaren Verunreinigungen erforderliche Sauerstoffkonzentration. Derartige verunreinigte Inertgase sind die zu rezirkulierenden Inertgase aus der thermischen Festphasebehandlung von Kondensationspolymeren wie Polyamide und Polyester. Bevorzugt findet die vorliegende Erfindung Anwendung zur Reinigung von mit Acetaldehyd, Ethylenglykol und niedermolekularen Kondensationsprodukten verunreinigtem Stickstoff aus der in der festen Phase durchgeführten Kristallisation und Nachkondensation und/oder Entaldehydisierung von Ethylenterephthalat-Homopolymeren und -Copolymeren.

Schutzgase für in Tanks gelagerte, sauerstoffempfindliche Chemikalien oder bei der Ausführung von chemischen Umsetzungen zur Inertisierung der Reaktoren und/oder als Schleppmittel für flüchtige Reaktionsnebenprodukte verwendete Inertgase lassen sich häufig, je nach chemischer Zusammensetzung der Verunreinigungen, ebenfalls nach dem vorliegenden Verfahren reinigen.

Die zu oxidierenden Verunreinigungen werden durch die Provenienz der Prozeßgase bestimmt und bestehen überwiegend aus organischen Verbindungen neben Kohlenmonoxid aus vorangehenden Reinigungszyklen und gegebenenfalls Stickstoffverbindungen. Bevorzugtes Anwendungsgebiet ist die Reinigung von Inertgasen mit, neben Kohlenmonoxid, einem Gehalt an oxidierbaren, ausschließlich aus mindestens zwei der Elemente C, H, O und/oder N bestehenden organischen Verunreinigungen im Bereich von 50 bis 10 000 ppm sowie an sonstigen oxidierbaren Verunreinigungen von weniger als 30 ppm. Als sonstige oxidierbare Verunreinigungen sind in erster Linie flüchtige Bestandteile von Katalysatoren und von Stabilisatoren zu nennen.

Als sauerstoffhaltiges Gas wird reiner Sauerstoff oder ein Gemisch von Sauerstoff mit Inertgasen wie Stickstoff oder Kohlendioxid, bevorzugt Luft, eingesetzt.

Die Oxidation der Verunreinigungen erfolgt in an sich bekannter Weise an einem Feststoffkatalysator aus Edelmetallen, besonders Platin und/oder Palladium, bei Temperaturen im Bereich von 250 bis 600 °C oder aus Mischoxiden, insbesondere von Vanadium, Chrom und/oder Wolfram, bei Temperaturen im Bereich von 400 bis 700 °C. Geeignete Katalysatoren sowie Reaktoren mit plattenförmigem Wabenkatalysator oder mit Schüttkatalysator sind im einschlägigen Handel erhältlich. Bei der Auswahl des Katalysators sind eventuell als Katalysatorgift wirkende Verunreinigungen des Prozeßgases zu berücksichtigen. Der Durchsatz bzw. die Raumgeschwindigkeit der Prozeßgase richtet sich nach den Angaben der Katalysatorlieferanten. Üblich sind Raumgeschwindigkeiten im Bereich von 1000 bis 10 000 h⁻¹. Die Erwärmung der Prozeßgase auf Oxidationstemperatur erfolgt, sofern erforderlich, durch Wärmetausch mit den den Oxidationsreaktor verlassenden Gasen und/oder durch externe Beheizung, beispielsweise elektrisch oder mittels separatem Heizkreislauf.

Abweichend von bekannten Verfahren erfolgt die Oxidation jedoch ohne Sauerstoffüberschuß, nur mit der stöchiometrischen bis leicht unterstöchiometrischen Sauerstoffmenge. Vor Eintritt in den katalytischen Oxidationsreaktor wird dem Prozeßgas soviel eines sauerstoffhaltigen Gases zudosiert, daß der nach dem Reaktor gemessene Kohlenmonoxidgehalt des Prozeßgases im Bereich von 30 bis 1000 vpm liegt. D. h. der Kohlenmonoxidgehalt des Prozeßgases wird nach Austritt aus dem Oxidationsreaktor gemessen und mit einem vorgegebenen Kohlenmonoxid-Sollwert im Bereich von 30 bis 1000 vpm verglichen, und die dem verunreinigten Prozeßgas zu zudosierende Menge eines sauerstoffhalten Gases in Abhängigkeit der Abweichung des gemessenen Kohlenmonoxidgehaltes vom Sollwert geregelt. Aus regeltechnischen Gründen erfolgt die Zudosierung entweder über einen einzigen, in Abhängigkeit der Kohlenmonoxidmessung geregelten Gesamtstrom, oder über einen fest eingestellten Teilstrom und einen in Abhängigkeit der Kohlenmonoxidmessung geregelten Reststrom.

Die Oxidation von kohlenstoffhaltigen Verunreinigungen verläuft über die intermediäre Bildung von Kohlenmonoxid bis hin zu Kohlendioxid. Nach der Oxidation liegt bei deutlichem Sauerstoffüberschuß praktisch nur Kohlendioxid neben Sauerstoff vor, während bei deutlichem Sauerstoffunterschuß größere Mengen an Kohlenmonoxid neben nicht umgesetzten Verunreinigungen vorhanden sind. Der erfindungsgemäß als Regelgröße verwendete Kohlenmonoxid-Sollwert wird innerhalb des beanspruchten Bereiches von 30 bis 1000 vpm so eingestellt, daß bei eventuellen Schwankungen der Konzentration an oxidierbaren Verunreinigungen und/oder der Gesamtmenge an zu reinigendem Gas unter Berücksichtigung der Regelansprechzeit die vorgegebenen Grenzkonzentrationen des Gases nach der Oxidation von weniger als 10 vpm Sauerstoff und von weniger als 10 ppm an nicht oxidierten, organischen Verunreinigungen auch kurzfristig nicht überschritten werden. Bei zu erwartenden größeren Schwankungen des zu reinigenden Gases wird daher der Kohlenmonoxid-Sollwert im oberen Bereich (etwa 200 bis 1000 vpm) und bei voraussichtlich nahezu konstantem Gas im unteren Bereich (etwa 30 bis 200 vpm) festgelegt. Für die Mehrzahl der Anwendungsfälle ist ein Kohlenmonoxid-Sollwert im Bereich von 30 bis 300 vpm geeignet.

Die Messung des Kohlenmonoxidgehaltes erfolgt in bekannter Weise mit einem handelsüblichen Gerät, vorzugsweise kontinuierlich. Eine Beeinflussung der Meßwerte durch andere Gaskomponenten ist dabei auszuschließen. Als geeignet erwies sich beispielsweise die Messung mit Hilfe einer Mikro-Brennstoffzelle, an deren Meßelektrode eine elektrochemische Oxidation des Kohlenmonoxids erfolgt. Andere Meßprinzipien können ebenso gut angewandt werden. Allgemein ist die Bestimmung von Kohlenmonoxid wenig störanfällig und im Bereich von 10 bis 1000 vpm mit einer Genauigkeit von etwa ± 2 % des Meßbereichs möglich. Der Kohlenmonoxidgehalt des gereinigten Gases stellt somit eine sehr zuverlässige Regelgröße dar.

Auf die Bestimmung des Restsauerstoffgehaltes kann bei dem erfindungsgemäßen Verfahren verzichtet werden. Insbesondere dient dieser Wert nicht als Regelgröße für die Dosierung des einzuspeisenden sauerstoffhaltigen Gases. Zweckmäßigerweise wird aber die Sauerstoffkonzentration als Grenzwert, bevorzugt im Bereich von 5 -10 vpm, bei dessen Überschreitung der Prozeß unterbrochen wird, herangezogen. Die Sauerstoffkonzentration des Prozeßgases nach dem Oxidationsreaktor ist unter anderem ein Indikator für die Katalysator-Desaktivierung und/oder für Störungen des Systems. In diesen Fällen steigt der Sauerstoffgehalt des Prozeßgases nach dem Oxidationsreaktor entsprechend stark an, während die Kohlenmonoxidkonzentration nahezu unverändert bleibt.

Die Sauerstoffbestimmung kann in beliebiger Weise erfolgen, wobei allerdings sicherzustellen ist, daß keine Beeinflussung durch andere Gaskomponenten, insbesondere durch Kohlendioxid, auftritt. Als geeignet erwies sich beispielsweise die Messung der sich in Abhängigkeit der in einem sauren Elektrolyten gelösten Sauerstoffmenge verändernden Spannung zwischen zwei in diesen Elektrolyten eintauchenden Elektroden.

Nach Austritt aus dem mit aktivem Katalysator gefüllten Oxidationsreaktor enthält das im wesentlichen aus einem inerten Gas bestehende Prozeßgas
< 10 vpm, vorzugsweise < 5 vpm, Sauerstoff,
< 10 ppm organische Verunreinigungen,
30 - 1000 vpm Kohlenmonoxid,
sowie Kohlendioxid und Wasser.

Der Sauerstoffgehalt des gereinigten Prozeßgases von weniger als 10 vpm, bevorzugt weniger als 5 vpm ermöglicht, im Gegensatz zu den eingangs erwähnten Verfahren des Standes der Technik, die Rückführung des Gases ohne katalytische Hydrierung von überschüssigem Sauerstoff mit Wasserstoff. Das Prozeßgas kann ohne zusätzliche Reinigung wieder eingesetzt werden. Bei ständiger Rezirkulierung des Gases zwischen Prozeß und erfindungsgemäßer Reinigung erfolgt jedoch eine Anreicherung des Kohlendioxids und des Wassers. Eine vollständige oder partielle Entfernung dieser Komponenten, insbesondere des Wassers, nach dem Oxidationsreaktor und vor der Rückführung in den Prozeß ist daher zweckmäßig. Wasser kann durch absorptive Trocknung mit Molekularsieben, Silikagel und dergleichen und Kohlendioxid durch Absorption in einer alkalischen Flüssigkeit oder an Molekularsieben entfernt werden. Eine andere Möglichkeit ist die Ausschleusung eines Teilstromes des gereinigten Prozeßgases.

### Beispiele 1 - 6:

Polyethylenterephthalat-Granulat wurde unter ständigem Durchleiten von Stickstoff zunächst kristallisiert und anschließend einer Festphase-Polykondensation unterworfen. Der aus dem Festphase-Polykondensationsreaktor austretende Stickstoffstrom enthielt Ethylenglykol, Acetaldehyd, niedermolekulare Kondensationsprodukte und Feuchtigkeit in je nach Betriebsbedingungen der Festphase-Polykondensation unterschiedlichen Mengen, außerdem etwas Kohlenmonoxid und Kohlendioxid aus vorausgehenden Reinigungszyklen.

Dieser Stickstoffstrom wurde nach Erwärmen auf etwa die Temperatur des Oxidationsreaktors mit einer Raumgeschwindigkeit von 2580 h⁻¹ durch einen Oxidationsreaktor geleitet. Der Oxidationsreaktor mit einer Temperatur von 400 °C enthielt 7,6 kg eines 1 : 1 gemischten Oxidationskatalysators der Firma Heraeus, Hanau/DE, Typ K-0264 mit 0,5 % Palladium auf Aluminiumoxid und Typ K-0152 mit 0,1 % Platin auf Aluminiumoxid, mit einer Schüttdichte von 700 g/l. In die Stickstoffleitung wurde etwa 2,5 m vor Eintritt in den Oxidationsreaktor Luft mit Umgebungstemperatur in Abhängigkeit des Kohlenmonoxidgehaltes nach dem Oxidationsreaktor geregelt eingespeist.

Der Kohlenmonoxidgehalt wurde nach Austritt aus dem Oxidationsreaktor an einem Teilstrom des Prozeßgases mit einem Meßgerät, Typ 6420, Meßbereich 0 - 10 000 ppm, Auflösung 1 ppm, der AMS Meßtechnik GmbH, Diehlheim/DE, ermittelt. Zusätzlich wurden, jeweils an Teilströmen, nach dem Oxidationsreaktor der Sauerstoffgehalt mit einem Meßgerät, Typ EL 7, Meßbereich 0 - 10 000 ppm, Auflösung 0,1 ppm, der Dr. Thiedig Anlagen- und Analysentechnik GmbH, Berlin/DE, und, sowohl vor als auch nach dem Oxidationsreaktor der Gehalt an organischem Kohlenstoff, berechnet als -CH₂-, mit einem Meßgerät, Typ FID 2000 E, der Amluk GmbH, Oberaudorf/DE, bestimmt.

Der aus dem Oxidationsreaktor austretende Stickstoffstrom wurde einer Trocknung mit Molekularsieb (4 Å) bei Umgebungstemperatur unterworfen und anschließend mit einem Restfeuchtegehalt von weniger als 20 ppm (P₂O₅-Meßzelle) in den Polyester-Kristallisations- und -Festphasen-Polykondensationsprozeß rückgeführt.

Die bei Regelung der Luftzufuhr auf verschiedene Kohlenmonoxid-Sollwerte jeweils über mehrere Stunden Betriebsdauer erhaltenen Ergebnisse sind in Tabelle 1 zusammengestellt. Die in Klammern aufgegebenen Werte beziehen sich auf vereinzelte Spitzenwerte.

### Beispiel 7:

Apparatur und Ausführung entsprachen den Beispielen 1 - 6, jedoch enthielt der Oxidationsreaktor 12 kg eines Oxidationskatalysators der Firma Doduco GmbH & Co., Sinsheim/DE, Typ COEX 0,1 mit 0,1 % Platin auf Trägermaterial und mit einer Schüttdichte von 800 g/l. Die Temperatur des Katalysators betrug zunächst 400 °C, später 440 °C. Das zu reinigende Prozeßgas bestand aus mit überwiegend Ethylenglykol verunreinigtem Stickstoff. Die über mehrere Stunden Betriebsdauer erhaltenen Ergebnisse sind ebenfalls in Tabelle 1 enthalten.

Wie aus der Tabelle ersichtlich, pendeln die Kohlenmonoxidwerte um den jeweiligen Sollwert, woraus eine entsprechende Zu- oder Abnahme der zugeführten Luftmenge resultiert. Trotz schwankender Zusammensetzung des zu reinigenden Prozeßgases enthielt das gereinigte Gas konstant weniger als 10 ppm an nicht oxidierten, organischen Verunreinigungen und weniger als 5 vpm Sauerstoff. Eine genauere Messung dieser beiden Komponenten erfolgte nur stichprobenartig; hierbei wurden ausschließlich Werte von weniger als 3 ppm an organischen Verunreinigungen und von weniger als 3 vpm Sauerstoff ermittelt.

Die Erprobung des erfindungsgemäßen Verfahrens während eines ununterbrochenen dreiwöchigen Betriebes verlief trotz Veränderung verschiedener Parameter ohne die geringste Störung des Kohlenmonoxidgeführten Regelsystems.

**Tabelle 1**

| Beispiel Nr. | 1 | 2 | 3 | 4 | 5 | 6 | 7 |
|---|---|---|---|---|---|---|---|
| N₂-Durchsatz (Nm³/h) | 28 | 28 | 28 | 28 | 28 | 28 | 32 |
| N₂-Temperatur nach Reaktor (°C) | 381 | 382-383 | 381 | 382 | 384 | 383 | 389-390 417-418^{a)} |

| CO nach Reaktor | | | | | | | |
|---|---|---|---|---|---|---|---|
| Sollwert (vpm) | 50 | 50 | 100 | 100 | 200 | 300 | 500 |
| Meßwerte (vpm) | 44-55 (44-61) | 50-59 (40-60) | 99-115 (61-136) | 93-110 (59-120) | 178-223 (176-258) | 303-352 | 450-550 (450-600) |
| Luftzufuhr (l/h) | 36-39 (30-39) | 52-59 (52-67) | 53-62 (46-64) | 60-68 (55-72) | 58-67 | 64-81 | 590 (570-590) |

| Organ. C als -CH₂- | | | | | | | |
|---|---|---|---|---|---|---|---|
| vor Reaktor (ppm) | 150-160 (100-170) | 180-190 (180-200) | 180 (160-190) | 220-260 | 180-200 | 180-200 | 1380-1500 |
| nach Reaktor (ppm) | < 10 | < 10 | < 10 | < 10 | < 1 | 1,3-2,8 | < 10 |
| O₂ nach Reaktor (vpm) | < 5 | 2,2-< 5 | < 5 | 1,7-2,1 | 1,8-2,0 | 2,0 | < 5 |

| | | | | | | | |
|---|---|---|---|---|---|---|---|
| Anmerkung: ^{a)} Katalysator-Temperatur 440 °C | | | | | | | |

## Patentansprüche

1. Kontinuierliches Verfahren zur Reinigung von im wesentlichen sauerstofffreien Prozeßgasen aus der thermischen Festphasenbehandlung von Kondensationspolymeren durch katalytische Oxidation der oxidierbaren überwiegend organischen Verunreinigungen unter Zudosierung eines sauerstoffhaltigen Gases, und nachfolgende Rückführung des gereinigten Prozeßgases in die thermische Festphasenbehandlung der Kondensationspolymere, dadurch gekennzeichnet, daß
- das Prozeßgas nach der Oxidation Kohlenmonoxid und weniger als 10 vpm Sauerstoff enthält,
- der Kohlenmonoxid-Gehalt des Prozeßgases nach der Oxidation gemessen wird und mit einem vorgegebenen Kohlenmonoxid-Sollwert im Bereich von 30 bis 1000 vpm verglichen wird,
- und die dem verunreinigten Prozeßgas zu zudosierende Menge eines sauerstoffhaltigen Gases in Abhängigkeit der Abweichung des gemessenen Kohlenmonoxid-Gehaltes vom Sollwert geregelt wird.

2. Verfahren gemäß Anspruch 1, dadurch gekennzeichnet, daß der Kohlenmonoxid-Sollwert im Bereich von 30 bis 300 vpm liegt.

3. Verfahren gemäß Anspruch 1 oder 2, dadurch gekennzeichnet, daß bei Überschreiten eines Grenzwertes im Bereich von 5 bis 10 vpm Sauerstoff im Prozeßgas nach der Oxidation der Prozeß unterbrochen wird.

4. Verfahren gemäß einem der Ansprüche 1 bis 3, dadurch gekennzeichnet, daß das sauerstoffhaltige Gas Luft ist.

5. Verfahren gemäß einem der Ansprüche 1 bis 4, dadurch gekennzeichnet, daß das Prozeßgas ein Inertgas mit vor der Oxidation, neben Kohlenmonoxid, einem Gehalt an oxidierbaren, ausschließlich aus den Elementen C, H, O und/oder N bestehenden organischen Verunreinigungen im Bereich von 50 bis 10 000 ppm und an sonstigen oxidierbaren Verunreinigungen von weniger als 30 ppm ist.

6. Verfahren gemäß Anspruch 5, dadurch gekennzeichnet, daß das Prozeßgas nach der Oxidation weniger als 10 ppm an organischen Verunreinigungen aufweist.

7. Verfahren gemäß einem der Ansprüche 1 bis 6, dadurch gekennzeichnet, daß das Prozeßgas nach der Oxidation durch Absorption von gebildetem Kohlendioxid befreit wird.

8. Verfahren gemäß einem der Ansprüche 1 bis 7, dadurch gekennzeichnet, daß das Prozeßgas nach der Oxidation einer Trocknung unterworfen wird.

9. Verfahren gemäß Anspruch 1, dadurch gekennzeichnet, daß das Prozeßgas ein mit Acetaldehyd, Ethylenglykol und niedermolekularen Kondensationsprodukten verunreinigtes Inertgas aus der thermischen Festphasenbehandlung von Ethylenterephthalat-Polymeren ist.

10. Verfahren gemäß einem der Ansprüche 1 bis 9, dadurch gekennzeichnet, daß das Prozeßgas verunreinigter Stickstoff ist.

## Claims

1. A continuous process for the purification of substantially oxygen-free process gases from the thermal solid-phase treatment of condensation polymers by catalytic oxidation of the oxidizable, predominantly organic impurities with the metered addition of an oxygenous gas, and subsequent recirculation of the purified process gas into the thermal solid-phase treatment of the condensation polymers,
**characterised in that**
- after oxidation the process gas contains carbon monoxide and less than 10 vpm oxygen,
- after oxidation the carbon monoxide content of the process gas is measured and is compared with a predetermined carbon monoxide set value in the range of 30 to 1,000 vpm,
- and the quantity of an oxygenous gas to be added to the contaminated process gas is controlled in dependence on the variation of the measured carbon monoxide content from the set value.

2. A process according to Claim 1,
**characterised in that** the carbon monoxide set value lies in the region of 30 to 300 vpm.

3. A process according to Claim 1 or 2,
**characterised in that**, when a limiting value in the range of 5 to 10 vpm oxygen in the process gas after oxidation is exceeded, the process is interrupted.

4. A process according to one of Claims 1 to 3,
**characterised in that** the oxygenous gas is air.

5. A process according to one of Claims 1 to 4,
**characterised in that** the process gas is an inert gas having, before oxidation and apart from carbon monoxide, a content of oxidizable, organic impurities comprising exclusively the elements C, H, O and/or N in the range of 50 to 10,000 ppm and a content of other oxidisable impurities of less than 30 ppm.

6. A process according to Claim 5,
**characterised in that** after oxidation the process gas has less than 10 ppm of organic impurities.

7. A process according to one of Claims 1 to 6,
**characterised in that** after oxidation the process gas is liberated by absorption from formed carbon dioxide.

8. A process according to one of Claims 1 to 7,
**characterised in that** after oxidation the process gas is subjected to a drying operation.

9. A process according to Claim 1,
**characterised in that** the process gas is an inert gas contaminated with acetaldehyde, ethylene glycol and low-molecular condensation products from the thermal solid-phase treatment of ethylene terephthalate polymers.

10. A process according to one of Claims 1 to 9,
**characterised in that** the process gas is contaminated nitrogen.

## Revendications

1. Procédé continu d'épuration de gaz de procédé sensiblement exempts d'oxygène provenant du traitement thermique en phase solide de polymères de condensation par oxydation catalytique des impuretés oxydables principalement organiques avec addition d'un gaz contenant de l'oxygène puis recyclage du gaz de procédé épuré dans le traitement thermique en phase solide des polymères de condensation, caractérisé en ce que
- le gaz de procédé contient après l'oxydation du monoxyde de carbone et moins de 10 vpm d'oxygène,
- la teneur en monoxyde de carbone du gaz de procédé après l'oxydation est mesurée et comparée avec une valeur de consigne du monoxyde de carbone prédéterminée dans le domaine de 30 à 1 000 vpm,
- et la quantité d'un gaz contenant de l'oxygène qui doit être ajoutée au gaz de procédé souillé est régulée en fonction de l'écart de la teneur en monoxyde de carbone mesurée par rapport à la valeur de consigne.

2. Procédé selon la revendication 1, caractérisé en ce que la valeur de consigne du monoxyde de carbone est située dans le domaine de 30 à 300 vpm.

3. Procédé selon la revendication 1 ou 2, caractérisé en ce que le procédé est interrompu en cas de dépassements d'une valeur limite dans le domaine de 5 à 10 vpm d'oxygène dans le gaz de procédé après l'oxydation.

4. Procédé selon l'une des revendications 1 à 3, caractérisé en ce que le gaz contenant de l'oxygène est l'air.

5. Procédé selon l'une des revendications 1 à 4, caractérisé en ce que le gaz de procédé est un gaz inerte comportant avant l'oxydation, outre du monoxyde de carbone, une teneur en impuretés oxydables organiques consistant exclusivement en les éléments C, H, O et/ou N dans le domaine de 50 à 10 000 ppm et en autres impuretés oxydables inférieure à 30 ppm.

6. Procédé selon la revendication 5, caractérisé en ce que le gaz de procédé présente après l'oxydation moins de 10 ppm d'impuretés organiques.

7. Procédé selon l'une des revendications 1 à 6, caractérisé en ce que le gaz de procédé est débarrassé par absorption, après l'oxydation, du dioxyde de carbone formé.

8. Procédé selon l'une des revendications 1 à 7, caractérisé en ce que le gaz de procédé est soumis à un séchage après l'oxydation.

9. Procédé selon la revendication 1, caractérisé en ce que le gaz de procédé est un gaz inerte souillé par de l'acétaldéhyde, de l'éthylèneglycol et des produits de condensation de faible masse moléculaire provenant du traitement thermique en phase solide de polymères de téréphtalate d'éthylène.

10. Procédé selon l'une des revendications 1 à 9, caractérisé en ce que le gaz de procédé est de l'azote souillé.
